# EUROPEAN PATENT APPLICATION

(11) **EP 4 383 073 A1**
(43) Date of publication of application: **12.06.2024**
(21) Application number: 22315309.9
(22) Date of filing: 06.12.2022
(51) Int. Cl.: G06F 9/50, G06Q 50/12

(54) **DYNAMIC SELECTION OF ALGORITHMS**

(71) Applicant: Amadeus S.A.S., 06410 Biot (FR)
(72) Inventor: Delahaye, Thierry, 06000 Nice (FR); Cao, Hongliu, 06300 Nice (FR); Wharton, Jessica, 06220 Golfe-Juan Vallauris (FR); De Antonio, Jorge, 28009 Madrid (ES); Georgieva, Atina, 28043 Madrid (ES)
(74) Representative: Samson & Partner Patentanwälte mbB

(57) **Abstract**

Methods, systems, and computer program products for implementing an optimization the provision request responses are presented. A request is received. One or more attributes associated with the request are obtained. Historical data associated with one or more attributes is obtained. An algorithm is selected from a plurality of algorithms based on the historical data. Request results are determined using the selected algorithm and provided to the client device.

## Description

### TECHNICAL FIELD

The present invention generally relates to computers and computer software, and more specifically, to methods, systems, and computer program products for provision of request responses in a distributed computer environment with imbalanced data.

### BACKGROUND

One task performed millions of times a second in the computerized networks around the world is generating responses to requests. Since this task is time and computational resources consuming, optimization of provision of requests is required. In the past, algorithms determining which data can be cached and reused, and when caches have to be updated, have already provided good results. However, caching is not the only solution for optimizing request responses. It has been shown that also using the appropriate algorithm for determining request responses can reduce the computing time and resources significantly.

However, selecting the appropriate algorithm is usually only applicable if the response result is deterministic, i.e., that results can be queried by using (at least a subset) of the query parameters or - if the results are to be estimated - if the underlying data used for the estimation is balanced. In particular, it is nearly impossible to determine one optimal algorithm to answer requests for estimating the most suitable responses with the available data being imbalanced.

Thus, improved methods, systems, and computer program products for providing faster, more accurate, and less expensive responses for a request are needed.

### SUMMARY

The present invention is defined by the independent claims.

In a first aspect, a method of determining request responses is presented. The method comprises receiving, at a response determination server, a request from a client device, obtaining, based on the request, one or more attributes associated with the request, obtaining, based on the one or more attributes, historical data associated with the one or more attributes, selecting an algorithm from a plurality of algorithms based on the historical data, determining request results using the selected algorithm, and providing the request results to the client device.

In a second aspect, a system is presented that is configured to execute the methods as described herein.

In a third aspect, a computer program product is presented that executes the methods as described herein when executed on a computer.

Further aspects are defined by the dependent claims.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF DRAWINGS

The accompanying drawings illustrate various embodiments of the invention and, together with a general description of the invention given above and the detailed description of the embodiments given below, serve to explain the embodiments of the invention. In the drawings, like reference numerals refer to like features in the various views.
Figure 1 illustrates an environment for implementing a process for optimization of the provision of request responses, according to embodiments of the invention.
Figures 2A and 2B illustrate example routines in the form of sequence diagrams that may be performed by the environment shown in FIG. 1, according to embodiments of the invention relating to recommendation requests.
Figure 3 illustrates an example process for optimization of travel recommendations presented to a user based on switching logic between two recommendation determination algorithms, according to embodiments of the invention.
Figure 4 illustrates an example process for a statistical model utilized as a recommendation determination algorithm for an optimization of travel recommendation process, according to embodiments of the invention.
Figure 5 is a flowchart of an example process for determining recommendation results for a recommendation request based on a selection of a recommendation algorithm, according to embodiments of the invention.
Figure 6 is a block diagram showing an example computer architecture for a computer capable of executing the software components described herein, according to embodiments described herein.

### DETAILED DESCRIPTION

Generally, systems, methods, devices, and techniques are provided for implementing an optimization of request responses that are shown or pushed to client devices implementing, e.g., a user application via an application programming interface (API). The optimization is based on a switching logic to select a particular algorithm/model based on one or more attributes associated with the request and obtained historical data. For example, for requests with small amounts of historical data, the switching logic can implement a statistical rules-based algorithm that may determine whether to pull in data of similar requests and/or use global average statistical data. However, for a larger amount of historical data, the switching logic can select a machine learning model algorithm that has been trained on historical requests similar to the received request to handle the request response determination.

This technology includes a process that receives a request from a client device. The request may be associated with different kind of events for which the results cannot be deterministically determined but the results have to be estimated. For example, the request may be associated with outages of a renewable energy farm. The process may include obtaining one or more attributes associated with the request, e.g., location of the renewable energy farm, type of the farm, number of solar modules or wind turbines, and such. The process may further include obtaining historical data of that renewable energy farm. The process may further include selecting an algorithm from a plurality of algorithms based on the historical data associated with the one or more attributes of the farm information. The process may further include determining request results using the selected algorithm (e.g., machine learning model or statistics model). Alternatively, in some implementations, other models could be added to the switching logic based on performance, such as a model using data augmentation. The process may further include providing the results, e.g., what solar modules or wind turbines are likely to fail next year, will produce the most energy, or where to add further components to the farm, to the client device.

In another example, the request may be associated with a travel event (e.g., a request for recommendations for an existing travel booking) for a traveler (e.g., the requestor at a client device may be an airline agency, travel agency, metasearch engine, other GDS, or based on the location of the requestor). The process may further include obtaining travel event information associated with the travel event, where the travel event information includes one or more attributes (or keys). The process may further include obtaining market data (e.g., historical data) associated with the one or more attributes. The process may further include selecting a recommendation algorithm from a plurality of recommendation algorithms based on the market data associated with the one or more attributes of the travel event information. The process may further include determining recommendation results using the selected recommendation. The process may further include providing the recommendation results to a merchant via the client device (e.g., provide top recommendations to show to a traveler, and expected click through rate (CTR) for recommendations to the requesting travel merchant).

The selection process may provide seamless historical data access to a selected algorithm in real-time by switching logic to provide request results based on the amount of historical data available. Moreover, the algorithmic models described herein (e.g., statistical model, machine learning model, etc.) may be implemented behind an API to overcome limitations of an internal app rules engine which enables more intelligence in the request response computations, as well as more flexibility to change them. Additionally, utilizing the algorithmic models behind an API can allow the models to be updated independently of the application point of view, and/or AIB tests can be conducted transparently from the application point of view. Thus, because machine learning models are less accurate when little data is available for a particular attribute of an request (e.g., a small or new windfarm, smaller airport for a destination of a travel itinerary), the historical data check at the switching logic of an instruction set may enable and optimize the relevance of the results, e.g., the validity of the estimations with regard to a renewable energy farm or the CTR for in-app recommendations or push notifications for an associated app at the end user's device (e.g., the traveler's device).

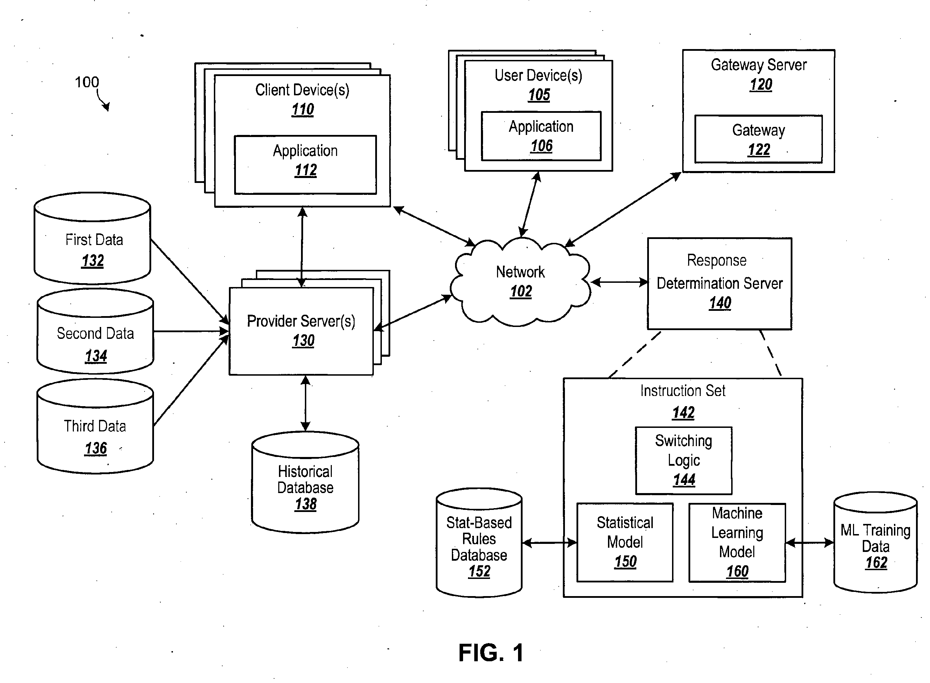

**Figure 1** is an example environment 100 for implementing a process for optimization of provision of request responses via dynamic switching logic, according to embodiments of the invention. Not all devices and components are required for each embodiment as will be apparent to the skilled person.

The example environment 100 includes a user device 105, a client device 110, one or more gateway server(s) 120, one or more provider server(s) 130, and one or more response determination server(s) 140, that communicate over a data communication network 102, e.g., a local area network (LAN), a wide area network (WAN), the Internet, a mobile network, or a combination thereof.

The user device 105 (e.g., an electronic device used by a user, such as a traveler booking a trip or the electronic device of an expert supervising a renewable energy farm) and the client device 110 (e.g., a device used by a requestor such as a travel agency or the energy provider that owns the renewable energy farm) can include a desktop, a laptop, a server, or a mobile device, such as a smartphone, tablet computer, wearable device (e.g., smartwatch), in-car computing device, and/or other types of mobile devices. The user device 105 includes applications, such as the application 106, for managing the renewable energy farm or managing and booking a travel request with the one or more merchants associated with the one or more travel provider server(s) 130 (e.g., airlines, hotel, rental car, etc.). The client device 110 includes applications, such as the application 112, for electric power management or managing the recommendation request and recommendation results to/from the one or more response determination server(s) 140 via the gateway server(s) 120. The user device 105 and the client device 110 can include other applications. The client device 110 (e.g., a travel merchant or an energy provider) initiates a request 310 by a requestor via application 112. A request may include search queries by requesting entities (such as clients, applications, browsers installed on user terminals, etc.) in the course of a search (e.g., airline booking search or search for specific farms).

Additionally, in the embodiment of a recommendation request, the request may include an in-application recommendation request after a travel booking has been initiated and/or completed. A requestor of a recommendation request with a client device 110 via a travel provider server 130 may include an airline agency, travel agency, metasearch engine, other dedicated global distribution systems (GDS), as for example airlines reservation systems which provide flight search applications for shopping business like flight booking, and the like that want to provide a traveler with recommendations to add to his or her travel itinerary.

The gateway 122 of the gateway server(s) 120 manages the location of the requests received from application 106 from the one or more user devices 105 and requests received from application 112 from the one or more client devices 110. The management protocols of gateway server 120 may be based on a redundant load-balancing system by managing multiple clients (e.g., client device(s) 110) so that a request is handled by one of the one or more response determination server(s) 140. For example, there may be multiple response determination server(s) 140 that are able to service the request, and the redundant load-balancing system of the gateway server(s) 120 is responsible for ensuring that the request is performed by one of the capable response determination server(s) 140.

The gateway server(s) 120 may be front end server(s) for managing, collecting, processing, and communicating requests (e.g., recommendation request) and processing data that is, e.g., stored in a historical database 138 from one or more provider server(s) . Further, the gateway server(s) 120 may be front end server(s) for managing, collecting, processing, and communicating request results from one or more response determination server(s) 140 to the client devices 110 via application 112.

In an exemplary embodiment, for an airline booking example, the gateway server(s) 120 may be front end server(s) for collecting, processing, and storing travel information (e.g., flight schedules, flight information such as such as departure and destination airport, airline, departure and return dates, fares, booking classes, passenger information, and the like) from a plurality of external travel systems (e.g., airport information systems, airline information systems, third-party intermediator systems, etc.) via the one or more provider server(s) 130 from the collective historical database 138, and/or the one or more response determination server(s) 140 (also named "recommendation determination server(s) 140" for the travel embodiment).

The one or more provider server(s) 130 receives and processes data from a plurality of distributed sources, such as first data stored in a first database 132, second data stored in a second database 134, and third data stored in a third database 136. The one or more provider server(s) 130 may store the data from the multiple sources in the historical database 138 when gathering the historical data.

In the travel example, the one or more provider server(s) 130 receives and processes travel inventory data such as revenue data stored in a revenues management database 132 from one or more revenue management system(s), bookings data stored in a bookings database 134 from one or more bookings management system(s), airlines/system configurations data from a configurations database 136 from one or more airlines/system configurations management system(s), and the like as real-time market data. The one or more provider server(s) 130 stores the travel inventory data from the multiple sources (e.g., revenues management database 132, bookings database 134, configurations database 136, etc.) in the historical database 138 for historical market data.

The one or more response determination server(s) 140 receives and processes, via an instruction set 142, the request(s) from the gateway server(s) 120. The instruction set 142 includes switching logic 144, a statistical model 150, and a machine learning model 160.

The instruction set 142 is configured to implement an algorithm selection processes described herein. For example, the instruction set 142 via the switching logic 144 determines whether, based on one or more attributes associated with the request and the associated historical data, which algorithm to use in real-time, such as the statistical model 150, the machine learning model 160, or another algorithm such as a data augmentation model. The statistical model 150 may be selected by the switching logic 144 when there is not enough historical data available for a particular attribute (e.g., a particular location of a wind farm, a mix of components of a renewable energy farm, or a particular origin and destination pair that include small airports/municipalities).

In some embodiments, the one or more attributes are associated with a location, e.g., with the location of a wind farm or the origin/destination location. In such embodiments, the statistical model 150 determines, based on information about the location associated with the one or more attributes, that the historical data satisfies first criteria. First criteria may also relate to a threshold that reflects whether there is enough data for this specific location to run the statistical model 150 for the location alone. If so, the statistical model 150 also obtains local statistical data associated with the one or more attributes, wherein the request results are determined based on the statistical data. Hence, if there is too less historical data to select another model (see description below for machine learning model 160), the statistical model 150 may determine whether there is enough historical data for determining statistically the request results.

Additionally or alternatively, the statistical model 150 may determine, based on location information associated with the one or more attributes, that the historical data does not satisfy first criteria. The statistical model 150 may then determine that group information associated with the one or more attributes for a group of locations determined to be similar to the location satisfies second criteria. Second criteria may also relate to another threshold that reflects whether there is enough data for a group of similar locations to run the statistical model 150 for. Similar locations may be, for example, wind farms with the same or a similar number of wind turbines (e.g. number of wind turbines only differing by a maximum of 5) or with a similar power output (e.g., plus/minus 5%). If so, the statistical model 150 may obtain group statistical data associated with the one or more attributes for the group of locations, wherein the request results are determined based on the group statistical data. Hence, if there is too less historical data to select another model (see description below for machine learning model 160), the statistical model 150 may determine whether there is enough historical data for determining statistically the request results for the location alone, and if not, the statistical model 150 may determine whether there is enough historical data for a group of similar locations and aggregate the data for determining statistically the request results.

Additionally or alternatively, the statistical model 150 may determine, based on location information associated with the one or more attributes, that the historical data does not satisfy first criteria. The statistical model 150 may then determine that group information associated with the one or more attributes for a group of locations determined to be similar to the location does not satisfy second criteria. If there is even not enough data for a group of similar locations, the statistical model 150 may obtain global statistical data associated with the one or more attributes, wherein the request results are determined based on the global statistical data.

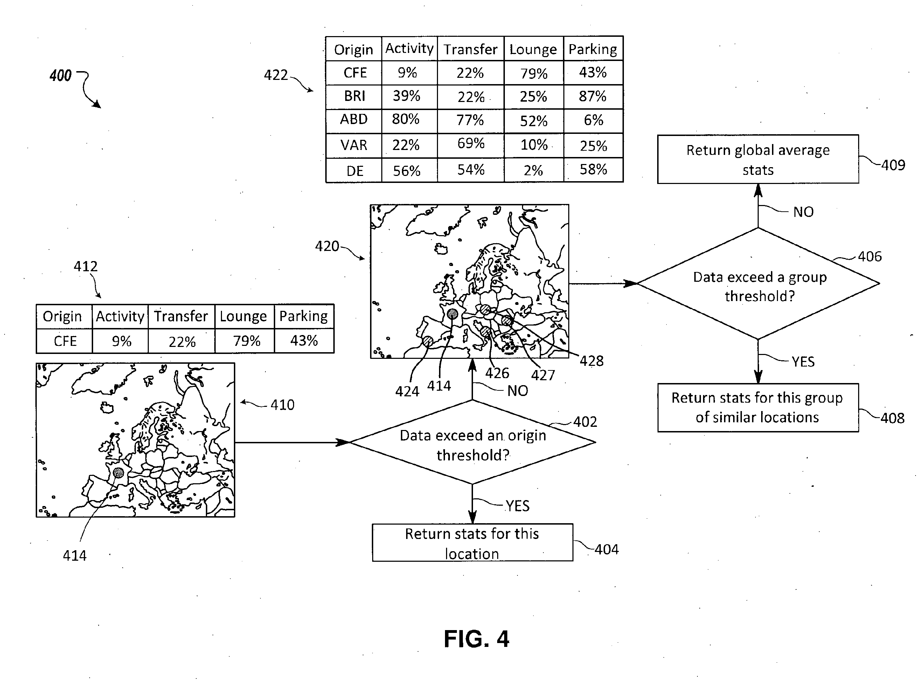

The statistical model 150 may implement a rules-based statistical process based on rules stored in the stat-based rules database 152. The actions of the statistical model 150 are - for the travel embodiment - further described herein with reference to the illustration in Figure 4 but are applicable similarly to any other technical use case, such as a renewable energy farm or the like.

The machine learning model 160 may be selected by the switching logic 144 when there are enough historical data (e.g. market data in the travel embodiment) available for a particular attribute (e.g., a more searched origin and destination pair that include larger airports/municipalities in the travel embodiment). The machine learning model 160 may be based on gradient boosting, random forest, etc. In the energy embodiment, the machine learning model 160 may be trained on historical data of wind and/or solar farms from different energy providers 130 and the respective attributes. The machine learning model 160 may be trained to predict failures in energy farms, providable energy, possible and beneficial extensions and the like.

In the travel embodiment, the machine learning model 160 may be trained on data for a large set of interactions (origin-destinations, days before departure, etc., recommendations shown and clicks) via access to the production data (e.g., historical database 138) and/or access to training data via the ML training database 162. The machine learning model 160 may be trained based on market data obtained from the one or more provider(s) 130, such as a large set of interactions (e.g., origin-destinations, days before departure, etc.), recommendations shown to travelers, and corresponding clicks for each recommendation provided (e.g., which recommendations provided the most user interaction for each associated travel itinerary). The machine learning model is trained to estimate the CTR for a recommendation from a set of recommendations. For example, each origin and destination pairing may have a set of recommendations, or each destination may have a set of recommendations, based on one or more attributes associated with an event. For example, for a travel booking, based on the origin and destination information, length of stay, number of travelers, user's previous booking history, may be associated with historical booking data for post booking activities such as booking a taxi or another travel activity after booking the flights.

In some embodiments, the selection of the algorithm is further based on available computational resources of the response determination server. For example, if there are only less computational resources available (e.g., below a threshold), the statistical model 150 based on limited data may be selected although there would be enough historical data for applying the machine learning model 160.

In some embodiments, the results provided to the client device may be provided in a user interface of a user application, e.g. applications 112 or 106 executed on client device 110 or on user device 105. The results may also be provided on the client device 110 and simultaneously on the user device 105.

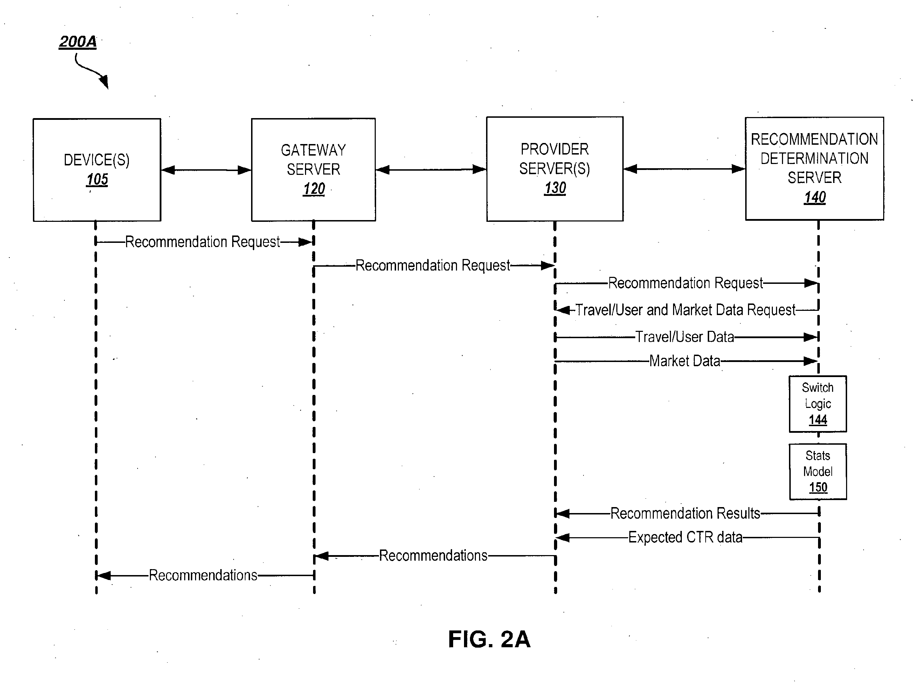

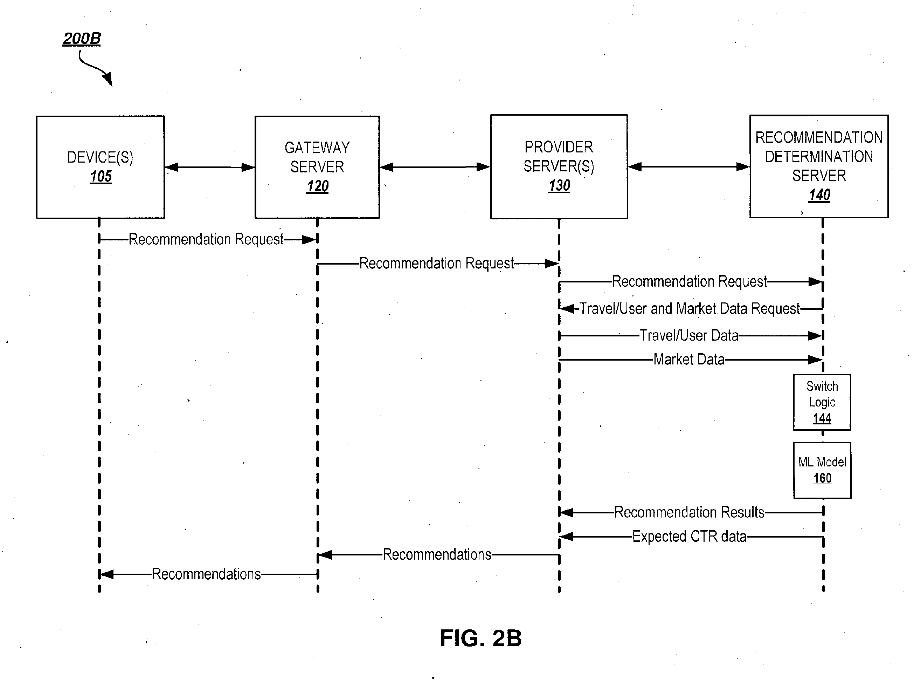

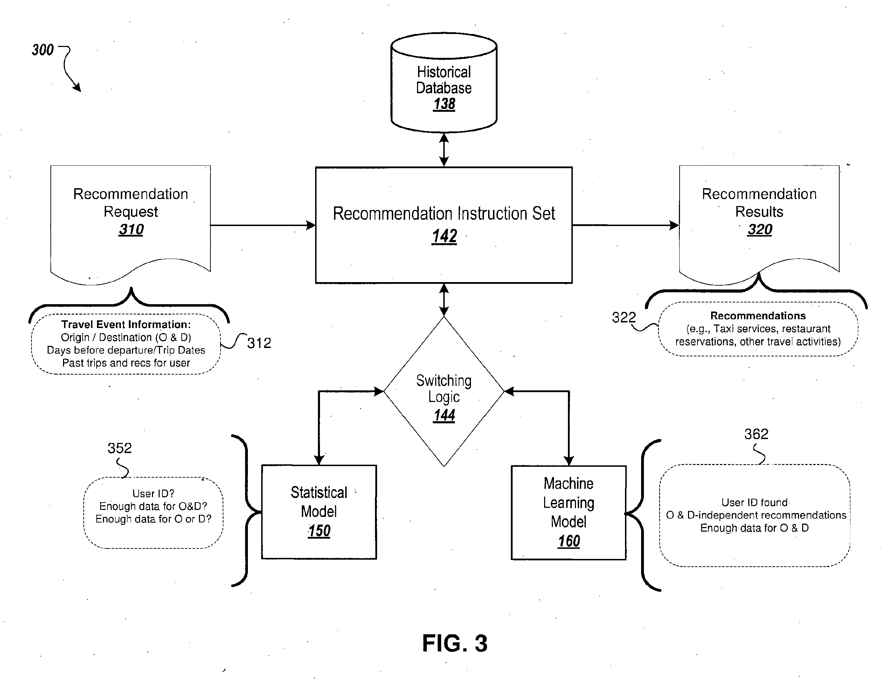

An example routine of implementing an algorithm selection protocol as illustrated in the environment of Figure 1 is further discussed herein for the travel embodiment with reference to sequence diagrams 200A and 200B of Figures 2A and 2B, respectively. Additionally, the actions of the instruction set 142 in the travel embodiment, are further described herein with reference to the illustration in Figure 3. Figure 4 then illustrates an example environment in the travel embodiment for a corresponding process 400. It should be noted that the focus on the travel embodiment in the following paragraphs is only, for illustrative purposes and should not be considered to be limiting. The present disclosure is applicable to all systems with data imbalance, i.e., with different amount of historical data for different events, in which request responses cannot be deterministically determined but have to be estimated.

A known system with data imbalance and estimated responses is associated with online advertising. Online (e.g., web-based, mobile, or in-app) advertising differs from advertising in traditional media in its degree of personalized audience targeting. For example, while broadcast media advertising, such as television advertising, aims to reach a target demographic defined by broad characteristics such as age-group, socioeconomic status, and/or general interests, online advertising aims to reach individuals having a particular interest in the product, service, or information that is presented.

Highly personalized audience targeting technology has led to the development of business models that are specific to online advertising. For example, it is now common for websites that provide news, aggregated information, and other content of interest to particular users, to host third-party advertisements as a means for generating revenue. Advertisers whose advertisements appear on these websites may pay the operator on the basis of viewing opportunities or impressions (commonly measured as 'cost per thousand impressions', a.k.a. CPM), on the basis of a cost per click (CPC), or according to some other measure of performance. The actual selection of an advertisement to be placed on a web page presented to an individual user may be based, at least in part, on a bidding process whereby an advertiser who is willing to pay a higher CPM, CPC, or other cost measure, is more likely to have its advertisement presented to the user.

According to one common model, the bidding process is facilitated by an 'ad exchange platform'. An ad exchange is a technology platform that implements a digital marketplace allowing advertisers and publishers of web sites and other online content to buy and sell advertising space, often through real-time auctions.

An ad exchange maintains a 'pool' of ad slots. Publishers contribute their ad slots, e.g., available advertising slots embedded within web pages served to users, into the pool. Buyers can then bid for the slots that they wish to purchase. Bidding decisions are often made in real time based on information such as the previous behavior of the user while an ad is being served to, time of day, device type, ad position, and so forth. In practice, these bidding decisions must themselves be made very rapidly, e.g., in at most a few tens of milliseconds, using technology platforms commonly known as demand side platforms (DSPs). Since there is a real cost to the advertiser in-purchasing impressions through an ad exchange, the performance of technologies and algorithms deployed in a DSP for assessing the potential 'value' of a user to make a bid decision may have a significant business impact.

By way of example, an average click through rate (CTR) for web-based display ads is around 0.05%, i.e., five clicks per 10,000 impressions. Where ad slots are purchased via an ad exchange, every impression represents a cost (i.e., the price paid following a winning bid). However, where a CPC model is employed, only 0.05% of impressions, on average, result in the generation of revenue. A low CTR thus results in an inefficient use of technical resources (such as the processing resources of the DSP) and a higher cost to successful advertisers (since a smaller number of 'clicks' must cover the cost of all impressions). Furthermore, a low CTR is indicative of a lack of suitability or relevance of the displayed advertising to online users.

It is, therefore, highly desirable to deploy technologies in DSP platforms that result in higher CTR. Such technologies benefit DSP operators by enhancing the utilization of technical resources and increasing revenues generated from user interactions with advertising content. Advertisers also benefit from more effective and successful placement of ads, resulting in greater click-though, and delivery of a larger audience of potential interested customers. Online users also benefit, since higher CTR is generally achieved by placement of ads having greater suitability and relevance to users.

For the travel industry, for example, one common problem may be how to quickly and efficiently provide applicable travel recommendations to a traveler after he or she has booked a trip (e.g., post-trip advertisements). Conversion and CTR are core objectives for these recommendations, as they directly drive application monetization. However, a common problem with travel recommendations (e.g., suggesting a taxi or another type of travel activity), the order of the recommendations is typically static, and the existing rules are not data-driven or at least based on real-time data. For example, existing recommendation systems use simple, static rules, which limits the quality of the recommendations shown to travelers. Additionally, the rules cannot be easily and automatically modified based on new data, as customer behavior may be susceptible to change quickly. Thus, improved methods, systems, and computer program products for providing faster, more accurate, and less expensive recommendations for a recommendation request associated with a travel event that adjusts to real time data are needed.

**Figure 2A** **and** **Figure 2B** illustrate example routines in the form of a sequence diagrams 200A, 200B, respectively, that may be performed by the environment 100 shown in FIG. 1 as a procedure to facilitate a recommendation algorithm selection protocol via switching logic, according to embodiments, e.g., travel related embodiments of the invention. Figures 2A and 2B provide exemplary routines that may be performed by the user device 105, the gateway server(s) 120, the provider server(s) 130 (via the client device 110), and the recommendation determination server(s) 140 consistent with some embodiments of the invention to process a recommendation algorithm selection protocol via switching logic.

Sequence diagram 200A illustrates an example recommendation algorithm selection process where the switching logic 144 determines to use the statistical model 150 to calculate the recommendation results (e.g., select the recommendations with the expected highest CTRs based on a rule-based statistical algorithm). For example, sequence diagram 200A is initiated at a user device 105 via application 106. For example, a recommendation request may be initiated at a consumer device (e.g., a user browsing a travel itinerary, or a particular flight segment associated with a new or existing travel event). The recommendation request is received by a gateway server 120. In response, the gateway server 120 communicates the recommendation request to the travel provider server 130. The travel provider server 130 determines, based on one or more attributes associated with the recommendation request, whether to request recommendations to provide to the user associated with the recommendation request. The travel provider server 130 then communicates recommendation request instructions to the recommendation determination server 140. The recommendation determination server 140 then requests and receives travel/user data and market data associated with the booking request from the travel provider server 130. The recommendation determination server 140 via the recommendation instruction set 142, sends the travel/user data and market data to the switching logic 144 to determine which recommendation algorithm to select. Based on the smaller amount of travel/user data and market data associated with the booking request, the switching logic 144 determines to select the statistical model 150 (e.g., a small airport/municipality for the origin and/or destination, thus a smaller amount of data available and not enough data to use a predictive machine learning model). The statistical model 150 then generates the recommendation results and the associated expected CTR data and provides that information to the travel provider server 130. The travel provider server 130 then acquires the associated recommendations (e.g., the content to be displayed to a user at the user device 105) and sends the recommendations to the user device 105 via the gateway server 120.

Sequence diagram 200B illustrates an example recommendation algorithm selection process where the switching logic 144 determines to use the machine learning model 160 to generate the recommendation results (e.g., select the recommendations with the predicted highest CTRs based on a machine learned algorithm). For example, sequence diagram 200B is initiated at a user device 105 via application 106. For example, a recommendation request may be initiated at a consumer device (e.g., a user browsing a travel itinerary, or a particular flight segment associated with a new or existing travel event). The recommendation request is received by a gateway server 120. In response, the gateway server 120 communicates the recommendation request to the travel provider server 130. The travel provider server 130 determines, based on one or more attributes associated with the recommendation request, whether to request a recommendation to provide to the user associated with the recommendation request. The travel provider server 130 then communicates recommendation request instructions to the recommendation determination server 140. The recommendation determination server 140 then requests and receives travel/user data and market data associated with the recommendation request from the travel provider server 130. The recommendation determination server 140 via the recommendation instruction set 142, sends the travel/user data and market data to the switching logic 144 to determine which recommendation algorithm to select. Based on the amount of travel/user data and market data associated with the booking request that meets/exceeds a particular threshold (as further described herein), the switching logic 144 determines to select the machine learning model 160 (e.g., a medium/large airport/municipality for the origin and/or destination, thus there is a sufficient amount of data available for a machine learning model). The machine learning model 160 then generates the recommendation results and the associated predicted CTR data and provides that information to the travel provider server 130. The travel provider server 130 then acquires the associated recommendations (e.g., the content to be displayed to a user at the user device 105) and sends the recommendations to the user device 105 via the gateway server 120.

The actions of the recommendation determination server(s) 140 utilizing the recommendation instruction set 142 and switching logic 144 to select a recommendation algorithm are further described herein with reference to the illustration in Figures 3-4.

**Figure 3** illustrates an example process for optimization of travel recommendations presented to a user based on switching logic between two recommendation determination algorithms, according to embodiments of the invention. In particular, Figure 3 illustrates an example environment 300 for a recommendation algorithm selection for a recommendation request 310. The objective for the recommendation instruction set 142 is to provide seamless data access to a recommendation algorithm in real-time to provide recommendation results 320. The recommendation instruction set 142 allows an optimization based on switching logic to select a particular recommendation algorithm/model based on travel information and obtained market data associated with portions of the travel information such as origin and destination information. For example, the recommendation instruction set 142, stored on one or more recommendation determination server(s) 140, receives a recommendation request 310 (e.g., from a client device 110 via a travel provider server 130) and determined recommendation results 320. The recommendation request 310 includes travel event information 312 (e.g., Origin / Destination (O & D), days before departure/trip dates, past trips, and previous recommendations for this particular traveler, etc.) that is associated with an event(s) (e.g., a current booking of a travel event, or browsing an already booked travel itinerary). The recommendation data or information 322 included in the recommendation results 320 for the travel industry based on a particular origin and destination may include taxi services, restaurant reservations, and other travel activities.

The recommendation instruction set 142 initiates a recommendation algorithm selection protocol to access switching logic 144 to determine which recommendation algorithm to initiate. The switching logic 144 then accesses the travel event information 312, obtains the market data associated with one or more attributes associated with the travel event information 312 from the historical database 138, and selects the recommendation algorithm. For example, based on the smaller amount of travel/user data and market data associated with a booking request, the switching logic 144 may determine to select the statistical model 150 (e.g., a small airport/municipality for the origin and/or destination, thus a smaller amount of data available and not enough data to use a predictive machine learning model). The statistical model 150 may then analyze the travel and user data information 352 and generates the recommendation results 320 and the associated expected CTR data and provides that information to the travel provider server 130. In particular, the stats-based information 352 identifies whether there is a user identification, if not, then no O&D independent recommendations can be generated. If there is not enough data for a particular O&D pairing, then the destination information may be removed. If there is not enough data for the origin or destination, then global statistics may be utilized for the recommendation results 320. The travel and user data information 352 as analyzed by the statistical model 150 includes an analysis that is further described herein with reference to Figure 4.

Alternatively, for example, based on the amount of travel/user data and market data associated with the booking request that meets/exceeds a particular threshold (as further described herein), the switching logic 144 may determine to select the machine learning model 160 (e.g., a medium/large airport/municipality for the origin and/or destination, thus there is a sufficient amount of data available for the machine learning model 160). The machine learning model 160 then analyzes the travel event information 312 and generates the recommendation results 320 and the associated predicted CTR data and provides that information to the travel provider server 130. For example, the machine learning model 160 may determine that the travel event information 312 includes a user identification, recommendations associated with both the origin and destination for the associated travel event, and enough market data for the origin and/or destination to accurately provide the predicted recommendations with the highest likelihood for a high CTR.

**Figure 4** illustrates an example environment for a process 400 for a statistical model utilized as a recommendation determination algorithm for an optimization of travel recommendation process, according to embodiments of the invention. Operations of the process 400 can be implemented, for example, by a system that includes one or more data processing apparatus, such as one or more statistical models 150 stored on one or more recommendation determination server(s) 140 of Figure 1. The process 400 can also be implemented by instructions stored on computer storage medium (e.g., recommendation instruction set 142), where execution of the instructions by a system that includes a data processing apparatus cause the data processing apparatus to perform the operations of the process 400.

The system obtains a first set of data associated with event information for an origin to determine if the set of data exceeds an origin threshold (402). For example, the statistical model 150 obtains market data 412 for the origin location 414 (e.g., a small airport in France, such as Clermont-Ferrand Auvergne Airport in Clermont-Ferrand (CFE)) as shown in the map 410. At step 402, the statistical model compares the market data 412 and any known user data and determines if the market data exceeds an origin threshold: For example, is there enough market data to accurately predict and provide a recommendation to a user that would likely generate a click or interaction with that recommendation at the user interface of the user device.

If the market data exceed the origin threshold, then the system returns stats for the location (404). For example, the statistical model determines that CFE airport includes enough market data to provide associated recommendations so may provide that 79% of the time, a traveler is interested (clicks) on a lounge recommendation, and 43% of the time may be interested in parking. However, if the market data for CFE airport does not exceed the origin threshold, then the system proceeds to obtain additional information.

The system obtains a second set of data associated with a group of similar attributes of the origin to determine if the second set of data exceeds a group threshold (406). For example, the statistical model 150 obtains market data 412 for the origin location 414 (e.g., CFE airport), as well as market data 422 for similar airports that have a comparable size of airport and/or comparable size of a municipality associated with the origin airport such as analogous location A 424 (e.g., LEI airport), analogous location B 426 (e.g., BRI airport), analogous location C 427 (e.g., VAR airport), and analogous location D 428 (e.g., GRZ airport), as shown in the map 420. For example, the group of comparable airports may include all small airports in the region (e.g., Europe). At step 406, the statistical model compares the market data 422 and any known user data and determines if the market data 422 exceeds a group threshold. For example, is there enough market data for the data associated with the group of analogous locations to accurately predict and provide a recommendation to a user that would likely generate a click or interaction with that recommendation at the user interface of the user device.

If the market data for the group of analogous locations exceeds the group threshold, then the system returns stats for the group of similar locations (408). For example, the statistical model determines that market data 422 for the group of similar airports includes enough market data to provide associated recommendations so may provide an average for each of the categories to determine whether a traveler is particularly interested (e.g., clicks on, hovers over, etc.) with any of the particular recommendations (e.g., activity, lounge, transfer, parking, etc.).

If the market data for the group of similar locations does not exceed the group threshold, then the system proceeds to return global average stats (409). For example, if there is not enough data for the origin or destination, then global statistics may be utilized for the recommendation results 320, as discussed herein.

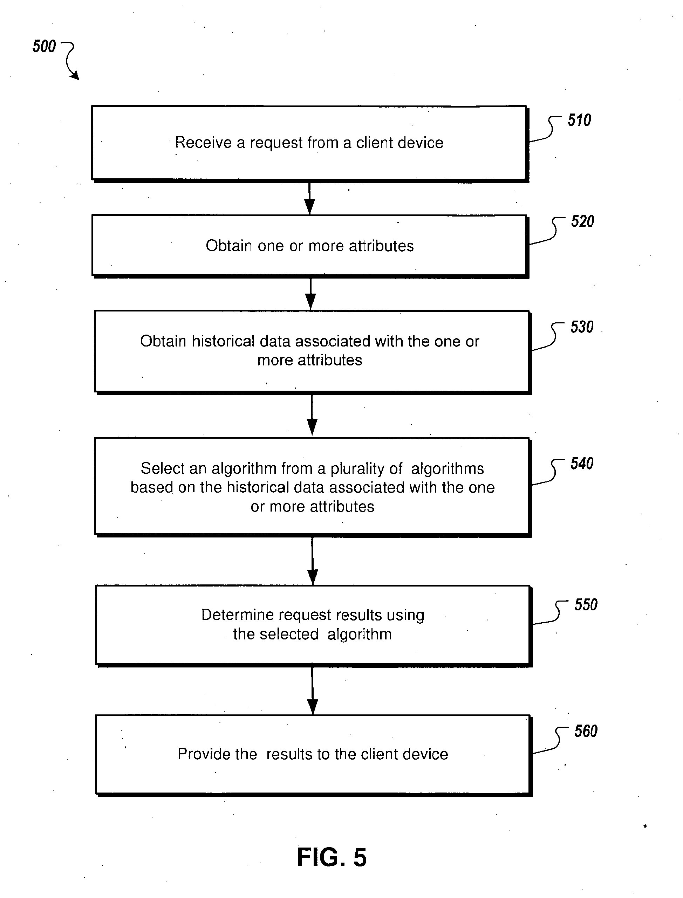

**Figure 5** illustrates a flowchart of an example process 500 for determining results for a request based on a selection of an algorithm, according to embodiments of the invention. Operations of the process 500 can be implemented, for example, by a system that includes one or more data processing apparatus, such as one or more request determination server(s) 140 of Figure 1. The process 500 can also be implemented by instructions stored on computer storage medium (e.g., instruction set 142), where execution of the instructions by a system that includes a data processing apparatus causes the data processing apparatus to perform the operations of the process 500.

The system receives a request from a client device (510). In some implementations, the recommendation request is associated with an event, such as a energy or a travel event. In the travel example, a client device 110 initiates a recommendation request (e.g., recommendation request 310) by a requestor via application 112 based on a booking request sent by a user/traveler from a user device 105 via application 106. A requestor of a recommendation request 310 may include an airline agency, travel agency, metasearch engine, other dedicated global distribution systems (GDS), as for example airlines reservation systems which provide flight search applications for shopping business like flight booking, and the like, that are looking to increase advertising revenue by providing further recommendations for travel booking associated with the travel event (e.g., taxi, hotel, activity, etc.)

The system obtains one or more attributes (520). For example, the instruction set 142, stored on one or more response determination server(s) 140, receives a request 310 (e.g., from a client device 110 via gateway 122) and determines results 320. The results 320 include data 322 (e.g., plant information, location of outages, taxi services, restaurant reservations, other travel activities, and the like).

In some implementations, the attributes are keys used by the algorithms. In an exemplary embodiment, for a travel booking reservation, the one or more attributes (aka keys) may include origin and destination information, a user identification (ID), a departure date, a trip duration, or a combination thereof.

The system obtains historical data associated with the one or more attributes (530). For example, as illustrated in the example environment 300 of Figure 3, the instruction set 142 receives a request 310 and accesses historical data from the historical database 138 or other data from database 132, database 134, and/or database 136. Historical data may include multiple sets of information, e.g., origin and destination information, past trips, past user interactions with recommendations, different countries, and the like. The historical data may include farm specific information (e.g., type and number of wind turbines, distance, weather etc.).

The system selects an algorithm from a plurality of algorithms based on the historical data associated with the one or more attributes (540). For example, the instruction set 142 includes switching logic 144 that determines which algorithm should be used based on the availability and the amount of historical data available at a current time associated with the attributed of the event (e.g., data imbalance). Additionally, the switching logic 144 further selects the algorithm based on available computational resources of the response determination server 140. For example, the machine learning model 160 may require more computational resources than the statistical model 150. If the available computational resources are not sufficient, even if there is enough data for applying the machine learning model 160, the switching logic 144 may nevertheless select the statistical model 150.ln some implementations, data imbalance may occur if there is a large amount of data available for specific keys, but only little data for other keys. The imbalance of data (e.g., most data coming from large windfarms, solar parks, or the like) can thus cause inaccurate predictions for small windfarms/solar parks with less data when using a machine learning model to determine the responses that would be predicted to occur Therefore, treating the smaller farms with a statistical model can help with this imbalance issue.

In the exemplary implementation, the switching logic 144 determines whether to select a machine learning model 160 with a large enough historical data set or selects a statistical model 150 which then determines whether to obtain similar group data (e.g., related windfarms, solar parks, or airports) or whether to pull in global statistics to make the algorithm selections, as discussed herein. Additionally, or alternatively, other algorithmic models could be added to the switching logic based on performance, such as a model using data augmentation. For example, other than using data from similar energy production farms or markets, the data may be augmented by generating synthetic data using one or more solutions such as synthetic minority oversampling technique (SMOTE), adaptive synthetic sampling approach (ADASYN), generative adversarial networks (GANs), etc.

In some implementations, selecting the algorithm from the plurality of algorithms based on the historical data associated with the one or more attributes comprises determining whether the historical data exceeds a threshold. In some implementations, in response to determining that the historical data exceeds a threshold, the process 500 selects a first algorithm (e.g., machine learning model 160) from a plurality of algorithms, and in response to determining that the historical data does not exceed a threshold, the process 500 selects a second algorithm (statistical model 150) from a plurality of algorithms, where the first algorithm is different that the second algorithm.

In an exemplary implementation, the statistical model 150 includes instructions that follow stats-based logic that compares different attributes to determine which statistics should be used. In some implementations, in response to determining that the historical data does not exceed a threshold, the process 500 determines, based on location information associated with the one or more attributes associated with a location, that the historical data satisfies first criteria (e.g., "Is there enough data for this location?" Yes - then return statistics for this location), and obtains local statistical data associated with the one or more attributes for the location. Thus, as discussed herein with reference to Figure 4, the results are determined based on the local statistical data via the statistical model 150.

In some implementations, in response to determining that the historical data does not exceed a threshold, the process 500 determines, based on the one or more attributes associated with a location, that the historical data does not satisfy first criteria. For example, if there is not enough data for the location, then the process 500 compiles statistics for similar energy farms or airports or the like. The process may also determine that group information associated with one or more attributes for a group of locations is similar to the location and satisfies the second criteria. For example, if there is enough group data for the location, then a group of locations similar to that location may be used, and the process further obtains group statistical data associated with the one or more attributes for the group of locations. Thus, as discussed herein with reference to Figure 4, the results are determined based on the group statistical data via the statistical model 150.

In some implementations, in response to determining that the historical data does not exceed a threshold, the process 500 determines, based on one or more of the attributes associated with a location:
1.) That the historical data does not satisfy first criteria (e.g., "is there enough data for this location?" No - then compile statistics for similar locations); and
2.) That group information associated with one or more attributes for a group of locations is like the location does not satisfy the second criteria (e.g., "is there enough group data for this location?" No - then pull in global average statistics).
The process 500 then obtains global statistical data associated with one or more attributes. Thus, as discussed herein with reference to Figure 4, the results are determined based on the global statistical data via the statistical model 150.

In some implementations, the selected algorithm includes a rule-based statistical model. In some implementations, the selected algorithm is based on a machine learning model. For example, the machine learning model (e.g., machine learning model 160), may be based on gradient boosting, random forest, etc. Additionally, as discussed herein, the machine learning model may be trained on data for a large set of interactions, events, or other information) via access to the live data (e.g., historical database 138) and/or access to the training data (e.g., ML training database 162).

The system determines results using the selected algorithm (550). For example, as illustrated in Figure 3, after the switching logic 144 receives the relevant historical data and selects the appropriate algorithm at step 540 (e.g., selects the machine learning model 160 if sufficient data, or uses the stats-based rules process via the statistical model 150), the selected algorithm then calculates the responses to be provided to the client device 110 and/or to the user device 105.

The system provides the results to the client device (560). For example, after the results 320 are compiled at the instruction set 142 at the one or more response determination server(s) 140 (e.g., after selecting and implementing an algorithm), the subset of results (e.g., such results being estimated to be most important to the user or the like) may be selected to be provided to an end user at the user device 105 via an API. The results 320 are sent to the requester (e.g., client device 110 via gateway 122) in response to the request 310. in some implementations, the selections for the results 320 are listed and based on expected relevance for the user, e.g., CTR for recommendations associated with the merchant or associated merchants (e.g., in order of the highest likelihood that a user will click and potentially book a recommended service, such as ground transportation). In some implementations, the selected results are further filtered based on associated rules for the requesting entity (e.g., an airline that partners with a particular ground transportation service provider may be listed above another ground transportation service).

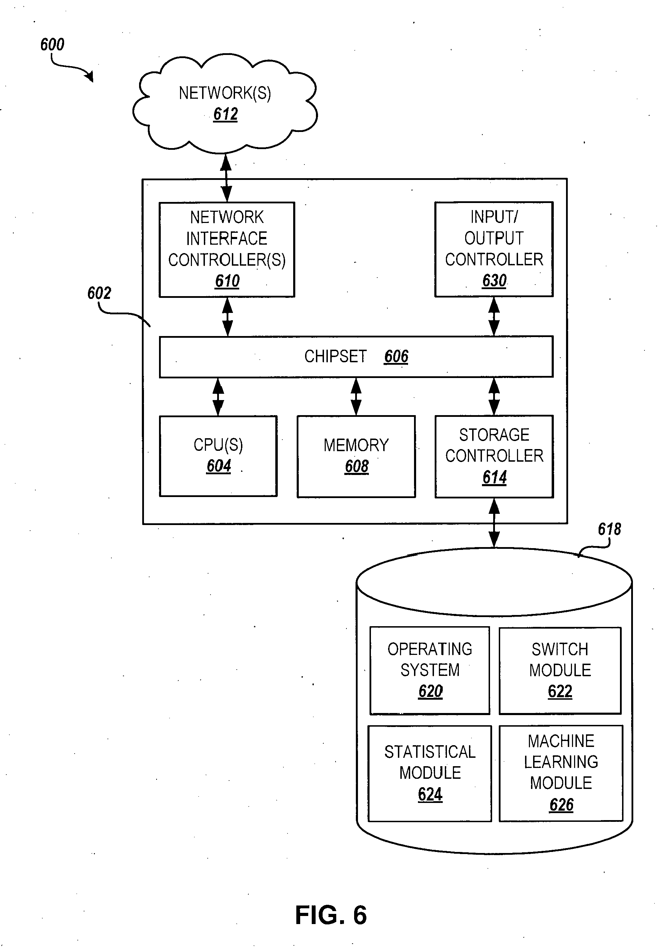

**Figure 6** illustrates an example computer architecture 600 for a computer 602 capable of executing the software components described herein for the sending/receiving and processing of tasks for the CA components. The computer architecture 600 (also referred to herein as a "server") shown in Figure 6 illustrates a server computer, workstation, desktop computer, laptop, or other computing device, and may be utilized to execute any aspects of the software components presented herein described as executing on a host server, or other computing platform. The computer 602 preferably includes a baseboard, or "motherboard," which is a printed circuit board to which a multitude of components or devices may be connected by way of a communication bus or other electrical communication paths. In one illustrative embodiment, one or more central processing units (CPUs) 604 operate in conjunction with a chipset 606. The CPUs 604 can be programmable processors that perform arithmetic and logical operations necessary for the operation of the computer 602.

The CPUs 604 preferably perform operations by transitioning from one discrete, physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits, including registers, adders-subtractors, arithmetic logic units, floating-point units, or the like.

The chipset 606 provides an interface between the CPUs 604 and the remainder of the components and devices on the baseboard. The chipset 606 may provide an interface to a memory 608. The memory 608 may include a random-access memory (RAM) used as the main memory in the computer 602. The memory 608 may further include a computer-readable storage medium such as a read-only memory (ROM) or non-volatile RAM (NVRAM) for storing basic routines that that help to startup the computer 602 and to transfer information between the various components and devices. The ROM or NVRAM may also store other software components necessary for the operation of the computer 602 in accordance with the embodiments described herein.

According to various embodiments, the computer 602 may operate in a networked environment using logical connections to remote computing devices through one or more networks 612, a local-area network (LAN), a wide-area network (WAN), the Internet, or any other networking topology known in the art that connects the computer 602 to the devices and other remote computers. The chipset 606 includes functionality for providing network connectivity through one or more network interface controllers (NICs) 610, such as a gigabit Ethernet adapter. For example, the NIC 610 may be capable of connecting the computer 602 to other computer devices in the utility provider's systems. It should be appreciated that any number of NICs 610 may be present in the computer 602, connecting the computer to other types of networks and remote computer systems beyond those described herein.

The computer 602 may be connected to at least one mass storage device 618 that provides non-volatile storage for the computer 602. The mass storage device 618 may store system programs, application programs, other program modules, and data, which are described in greater detail herein. The mass storage device 618 may be connected to the computer 602 through a storage controller 614 connected to the chipset 606. The mass storage device 618 may consist of one or more physical storage units. The storage controller 614 may interface with the physical storage units through a serial attached SCSI (SAS) interface, a serial advanced technology attachment (SATA) interface, a fiber channel (FC) interface, or other standard interface for physically connecting and transferring data between computers and physical storage devices.

The computer 602 may store data on the mass storage device 618 by transforming the physical state of the physical storage units to reflect the information being stored. The specific transformation of physical state may depend on various factors, in different embodiments of the invention of this description. Examples of such factors may include, but are not limited to, the technology used to implement the physical storage units, whether the mass storage device 618 is characterized as primary or secondary storage, or the like. For example, the computer 602 may store information to the mass storage device 618 by issuing instructions through the storage controller 614 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computer 602 may further read information from the mass storage device 618 by detecting the physical states or characteristics of one or more particular locations within the physical storage units.

The mass storage device 618 may store an operating system 620 utilized to control the operation of the computer 602. According to some embodiments, the operating system includes the LINUX operating system. According to another embodiment, the operating system includes the WINDOWS^{®} SERVER operating system from MICROSOFT Corporation of Redmond, Wash. According to further embodiments, the operating system may include the UNIX or SOLARIS operating systems. It should be appreciated that other operating systems may also be utilized. The mass storage device 618 may store other system or application programs and data utilized by the computer 602, such as a switch module 622 (e.g., switching logic 144) to select an algorithm, a statistical model 624 (e.g., statistical model 150), and a machine learning model 626 (e.g., machine learning model 160), according to embodiments described herein.

In some embodiments, the mass storage device 618 may be encoded with computer-executable instructions that, when loaded into the computer 602, transforms the computer 602 from being a general-purpose computing system into a special-purpose computer capable of implementing the embodiments described herein. These computer-executable instructions transform the computer 602 by specifying how the CPUs 604 transition between states, as described above. According to some embodiments, from the response determination server(s) 140 perspective, the mass storage device 618 stores computer-executable instructions that, when executed by the computer 602, perform portions of the process 500, for implementing an algorithm selection system, as described herein. In further embodiments, the computer 602 may have access to other computer-readable storage medium in addition to or as an alternative to the mass storage device 618.

The computer 602 may also include an input/output controller 630 for receiving and processing input from a number of input devices, such as a keyboard, a mouse, a touchpad, a touch screen, an electronic stylus, or other type of input device. Similarly, the input/output controller 630 may provide output to a display device, such as a computer monitor, a flat-panel display, a digital projector, a printer, a plotter, or other type of output device. It will be appreciated that the computer 602 may not include all of the components shown in Figure 6, may include other components that are not explicitly shown in Figure 6, or may utilize an architecture completely different than that shown in Figure 6.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically includes computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

## Claims

1. A computer-implemented method of determining request responses comprising:
receiving, at a response determination server, a request from a client device;
obtaining, based on the request, one or more attributes associated with the request;
obtaining, based on the one or more attributes, historical data associated with the one or more attributes;
selecting an algorithm from a plurality of algorithms based on the historical data;
determining request results using the selected algorithm; and
providing the results to the client device.

2. The computer-implemented method of claim 1, wherein selecting the algorithm from the plurality of algorithms based on the historical data comprises:
determining whether the historical data exceeds a threshold.

3. The computer-implemented method of claim 2, further comprising:
in response to determining that the historical data exceeds the threshold, selecting a first algorithm from a plurality of algorithms;
in response to determining that the historical data does not exceed the threshold, selecting a second algorithm from a plurality of algorithms,
wherein the first algorithm is different that the second algorithm.

4. The computer-implemented method of claim 3, wherein the one or more attributes are associated with a location.

5. The computer-implemented method of claim 4, wherein the second algorithm comprises:
determining, based on location information associated with the one or more attributes, that the historical data satisfies first criteria; and
obtaining local statistical data associated with the one or more attributes, wherein the results are determined based on the statistical data.

6. The computer-implemented method of claim 4 or claim 5, wherein the second algorithm comprises:
determining, based on location information associated with the one or more attributes, that the historical data does not satisfy first criteria;
determining that group information associated with the one or more attributes for a group of locations determined to be similar to the location satisfies second criteria; and
obtaining group statistical data associated with the one or more attributes for the group of locations, wherein the request results are determined based on the group statistical data.

7. The computer-implemented method of any one of claims 4 to 6, wherein the second algorithm comprises:
determining, based on location information associated with the one or more attributes, that the historical data does not satisfy first criteria;
determining that group information associated with the one or more attributes for a group of locations determined to be similar to the location does not satisfy second criteria; and
obtaining global statistical data associated with the one or more attributes, wherein the request results are determined based on the global statistical data.

8. The computer-implemented method of any one of claims 1 to 7, wherein the selected algorithm comprises a rules-based statistical model.

9. The computer-implemented method of any one of claims 1 to 8, wherein the selected algorithm is based on a machine-learning model.

10. The computer-implemented method of any one of claims 1 to 9, wherein the selection of the algorithm is further based on available computational resources of the response determination server.

11. The computer-implemented method of any one of claims 1 to 10, wherein providing the request results to the client device comprises providing a subset of request results for display in a user interface of a user application.

12. The computer-implemented method of any one of claims 1 to 11, wherein the request is associated with a travel event, and the one or more attributes comprise travel information for the travel event.

13. The computer-implemented method of claim 12, wherein the one or more attributes comprise origin and destination information, a user identification (ID), a departure date, a trip duration, or a combination thereof.

14. A computing system of determining request responses, wherein the computing system is configured to execute the method of any one of the preceding claims.

15. A computer program product comprising program code instructions stored on at least one computer readable medium to execute the method of any one of the claims 1 to 13, when said program code instructions are executed on a computer.
